# EUROPÄISCHE PATENTSCHRIFT

(11) **EP 1 110 443 B1**
(45) Veröffentlichungstag und Bekanntmachung des Hinweises auf die Patenterteilung: **08.12.2004**
(21) Anmeldenummer: 99204519.5
(22) Anmeldetag: 24.12.1999
(51) Int. Cl.: A01D 43/10

(54) **Mähaufbereiter**
Mower conditioner
Faucheuse-conditionneuse

(43) Veröffentlichungstag der Anmeldung: 27.06.2001
(73) Patentinhaber: MAASLAND N.V., 3155 PD Maasland (NL)
(72) Erfinder: Koorn, Maarten, 3123 CP Schiedam (NL)
(74) Vertreter: Corten, Maurice Jean F.M.

(56) Entgegenhaltungen:
- EP-A- 0 116 662
- EP-A- 0 269 166
- EP-A- 0 361 573
- EP-A- 0 622 009
- FR-A- 2 376 615
- FR-A- 2 560 484
- US-A- 4 724 661
- US-A- 5 970 689

## Beschreibung

Die Erfindung betrifft einen Mähaufbereiter nach dem Oberbegriff des Patentanspruches 1.

Mähaufbereiter sind geeignet und anwendbar zum Mähen und anschliessenden Aufbereiten des Halmgutes zwecks schnellerer Trocknung. Bei einem bekannten Mähaufbereiter dieser Art (EP 0 116 662 A1) ist das Mähwerk unabhängig von einem nachgeschalteten Aufbereiter höhenbeweglich an einem Hauptrahmen angelenkt. Der Aufbereiter kann relativ zum Hauptrahmen wahlweise in eine Außerbetriebsstellung geschwenkt werden, ist aber im Betrieb diesem fest zugeordnet, in dem die Tragarme des Aufbereiters auf der Oberseite des Hauptrahmens aufliegen. Dadurch wird das Mähwerk vom Gewicht des Aufbereiters entlastet. Diese Geräteanordnung hat jedoch folgende Nachteile:
- Da das Mähwerk Bodenunebenheiten höhenbeweglich folgt, nicht aber der Aufbereiter, ist die Materialübergabe vom Mähwerk zum Aufbereiter problematisch.
- Durch den nicht ausweichenden Aufbereiter muss der Abstand zwischen Mähwerk und Aufbereiter gross genug sein, damit das Mähwerk beim Ausweichen nicht gegen den Aufbereiter stösst.
- Bedingt durch den relativ grossen Abstand von Mähwerk zu Aufbereiter baut diese Gerätekombination relativ lang und benötigt aufgrund der längeren Hebelarme eine stärkere Dimensionierung der Bauteile.

Es sind auch Mähaufbereiter bekannt (FR 2 560 484 A1), bei denen Mähwerk und Aufbereiter als eine Baueinheit ausgebildet sind, die als Ganzes höhenbeweglich an einem Hauptrahmen, z. B. über Parallellenker und eine Gewichtsentlastungsfeder angelenkt sind. Aufgrund des hohen Gesamtgewichtes reagiert diese Baueinheit bei Bodenunebenheiten nur relativ träge. Darüber hinaus muss eine aufwendige Gewichtsentlastungsfederanordnung vorgesehen sein, die gewährleistet, dass die Federentlastung auf die Baueinheit über dem Anhubweg nahezu konstant bleibt.

Ausgehend von diesem Stand der Technik liegt der Erfindung die Aufgabe zugrunde, die Arbeitsweise, insbesondere die Bodenanpassung eines Mähaufbereiters unter Verminderung des konstruktiven Bauaufwands zu verbessern.

Diese Aufgabe wird gemäß der Erfindung nach den kennzeichnenden Merkmalen des Patentanspruches 1 gelöst.

Während des Betriebes und insbesondere bei Bodenunebenheiten ist der Aufbereiter nunmehr in seiner Stellung relativ zum Hauptrahmen und zum Mähwerk veränderbar. Infolge der gelenkigen Kopplung von Mähwerk und Aufbereiter passen sich nunmehr beide Einheiten gemeinsam an Bodenunebenheiten an. Der Aufbereiter kann so in kleinem Abstand zum Mähwerk angeordnet werden, so wie es für eine optimale Materialübergabe am günstigsten ist. Da ausserdem ein Teil des Aufbereitergewichtes vom Hauptrahmen aufgenommen wird, kann sich das Mähwerk trotz kleiner dimensionierter Gewichtsentlastungsfeder leichter und schneller Bodenunebenheiten anpassen. Vorteilhaft ist darüber hinaus, dass der Aufbereiter aufgrund der gelenkigen Verbindung das Mähwerk weniger belastet. Bauteile können leichter ausgelegt werden.

Durch die Anordnung einer Gelenkachse des Verbindungsgliedes in geringem Abstand zum Mähkreisel ist gewährleistet, dass der Aufbereiter trotz Verschwenkung dicht am Mähwerk bleibt.

In besonders einfacher Ausgestaltung ist das Verbindungsglied als Drehgelenk ausgebildet, wodurch gewährleistet ist, dass der Aufbereiter mit dem Mähwerk anhebbar und gleichzeitig verschwenkbar ist, was besonders für an Parallellenkern abgestützte Mähwerke wichtig ist.

Nach einem weiteren Merkmal der Erfindung ist der Aufbereiter durch wenigstens ein Tragelement mit dem Hauptrahmen gelenkig verbunden, welches einenends schwenkbar um wenigstens eine obere horizontale Gelenkachse am Hauptrahmen und anderenends um eine untere horizontale Gelenkachse schwenkbar am Aufbereiter angelenkt ist. Dadurch wird ein Teil des Aufbereitergewichts vom Hauptrahmen aufgenommen und ein Ausweichen des Aufbereiters mit dem Mähwerk nach hinten gewährleistet.

Damit sich Mähwerk und Aufbereiter bei Bodenunebenheiten möglichst gleichmässig den Unebenheiten anpassen, liegen die untere Gelenkachse des Trageelementes und die Drehachse des Aufbereitungsrotors etwa in einer horizontalen Ebene.

Zur Anpassung von Mähwerk und Aufbereiter an einseitige Bodenunebenheiten wird vorgeschlagen, dass der Aufbereiter sowohl um eine obere horizontale Längsmittelachse pendelbar als auch um eine horizontale Querachse schwenkbar am Hauptrahmen angelenkt ist.

Weitere Merkmale, Vorteile und bauliche Ausgestaltungen der Erfindung ergeben sich aus den Unteransprüchen.

Die Erfindung wird im Folgenden anhand einer in der Zeichnung dargestellten Ausführungsform näher erläutert.

Es zeigt:
- Fig. 1: eine schematische Seitenansicht eines Mähaufbereiters in normaler Arbeitsstellung,
- Fig. 2: eine Ansicht nach Fig. 1, jedoch in angehobener Ausweichstellung des Mähaufbereiters beim Überfahren einer Bodenerhöhung.

- Fig. 3: in vergrösserter Vorderansicht eine zweite Ausführungsform eines Tragelementes zur pendel- und schwenkbaren Verbindung des Aufbereiters mit dem Hauptrahmen.

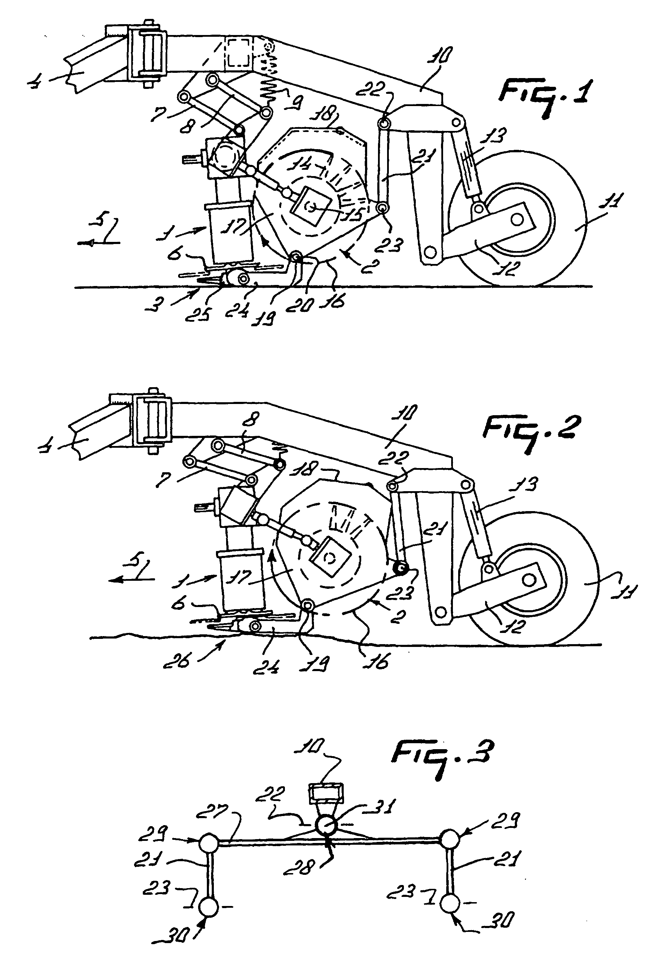

Der Mähaufbereiter besteht aus einem Mähwerk 1 und einem Aufbereiter 2 für Halmgut und kann, wie in Fig. 1 dargestellt, als Anhängegerät ausgebildet sein. Er wird in Arbeitsstellung 3 über eine Zugdeichsel 4 von einem landwirtschaftlichen Zugfahrzeug versetzt zu diesem in durch Pfeil 5 gekennzeichnete Fahrtrichtung gezogen und über eine nicht dargestellte Gelenkwelle vom Zugfahrzeug angetrieben.

Das Mähwerk 1 ist in diesem Ausführungsbeispiel als Scheibenmähwerk herkömmlicher Bauweise mit Mähkreiseln 6 ausgebildet. Das Mähwerk 1 ist über Parallellenker 7, 8 und Gewichtsentlastungsfedern 9 auf- und abbeweglich an einem Hauptrahmen 10 angelenkt.

Am Hauptrahmen 10 ist die Zugdeichsel 4 gelenkig und über einen nicht dargestellten Druckmittelantrieb in ihrer Schwenklage einstellbar angelenkt. Es sind beidseitig Laufräder 11 vorgesehen, die den Hauptrahmen 10 zum Erdboden abstützen. Die Laufräder 11 sind an den rückwärtigen Enden von Längslenkern 12 drehbar befestigt. Die vorderen Enden der Längslenker 12 sind schwenkbar am Hauptrahmen 10 angelenkt. Der Hauptrahmen 10 ist mittels Hydrozylinder 13 in seiner Höhenlage zum Erdboden einstellbar. Die Hydrozylinder 13 greifen einerseits am Hauptrahmen 10 und andererseits an den Längslenkern 12 an.

Der Aufbereiter 2 weist einen Zinkenrotor 14 auf, der um eine horizontale, quer zur Fahrtrichtung 5 liegende Drehachse 15 in Richtung des Pfeiles 16 angetrieben umläuft. Der Zinkenrotor 14 ist beidseitig in durch nicht dargestellte Querstreben verbundenen Seitenwänden 17 gelagert und oberhalb durch eine Abdeckung 18 abgedeckt. Auf weitere Einzelheiten zur Gestaltung eines Aufbereiters 2 wird hier nicht eingegangen, da diese grundsätzlich bekannt sind.

Neu ist die gelenkige Verbindung des Aufbereiters 2 mit dem Mähwerk 1. Die Verbindung ist so ausgelegt, dass der Aufbereiter 2 zwangsläufig den Bewegungen des Mähwerkes 1 folgt, ohne seine Stellung zum Mähwerk wesentlich zu verändern. Der Aufbereiter 2 ist mähwerksseitig auf beiden Aussenseiten durch je ein unmittelbar hinter und seitlich ausserhalb der Umlaufbahn der äusseren Mähkreisel 6 gelegenes Drehgelenk 19 mit horizontaler Querachse 20 mit dem Mähwerk 1 gekuppelt. Auf der dem Mähwerk 1 abgewandten Seite erfolgt die Verbindung durch aufwärts gerichtete, auf Zug beanspruchte Lenker 21, die um eine obere horizontale Gelenkachse 22 am Hauptrahmen 10 und um eine untere horizontale Gelenkachse 23 am Aufbereiter 2 bzw. an dessen Seitenwänden 17 angelenkt sind. Beide Gelenkachsen 22, 23 sind parallel zur Querachse 20 angeordnet An beiden Seiten des Mähwerkes 1 sind Winkelkonsolen 24 befestigt, deren nach oben weisende Schenkel 25 als Doppellasche mit je einer Bohrung ausgeführt sind. Jede Doppellasche nimmt zwischen sich eine Seitenwand 17 mit einer gleichgroßen Bohrung auf. Die gelenkige Verbindung erfolgt durch einen alle drei Bohrungen durchsetzenden, nicht dargestellten Sicherungsbolzen. Die Gelenkachsen 22, 23 sind achsparallel zur Querachse 20 angeordnet. Damit der Aufbereiter 2 seine Stellung in Relation zum Mähwerk 1 bei Bodenunebenheiten möglichst wenig verändert, liegt die untere Gelenkachse 23 etwa in gleicher Höhe zum Erdboden wie die Drehachse 15. Um eine Entlastung des Mähwerkes 1 vom Gewicht des Aufbereiters 2 zu bewirken, ist das Drehgelenk 19 gegenüber der Drehachse 15 mit Abstand nach vorne versetzt, so dass das Drehgelenk 19 einen grösseren Abstand von der Gelenkachse 23 hat als die Drehachse 15. Um eine Anpassung des Mähwerkes 1 und des Aufbereiters 2 bei einseitigen Bodenunebenheiten zu erreichen, können sowohl die Parallellenker 7, 8, das Drehgelenk 19 und die Lenker 21 mit nicht dargestellten Kugelkopfgelenken versehen sein. Alternativ zu zwei Lenkern 21 kann mittig auch nur ein einziger, nicht dargestellter Lenker vorgesehen sein, der oben durch ein Kugelgelenk am Hauptrahmen 10 und unten durch ein Kugelgelenk am Aufbereiter angreift.

Während des Betriebes gleitet das Mähwerk 1 auf Gleitelementen 25 über den Erdboden und kann sich allen Bodenunebenheiten anpassen. Während dieser Bewegungen erfährt auch der Aufbereiter 2 zwangsläufig Verschwenkungen relativ zum Mähwerk 1, so dass in jedem Betriebszustand auf kürzestem Wege ein guter Materialfluss vom Mähwerk 1 zum Aufbereiter 2 gewährleistet ist. Wie aus Figur 2 ersichtlich, in der das Mähwerk 1 in durch eine Bodenerhöhung angehobener Ausweichstellung 26 dargestellt ist, verschwenkt der Aufbereiter 2 beim Anheben des Mähwerkes 1 im Uhrzeigersinn und gleichzeitig über die Gelenkachsen 22, 23 der Lenker 21 nach hinten. Somit folgt der Aufbereiter 2 den Bewegungen des Mähwerkes 1 entsprechend dessen Parallellenkeranordnung 7, 8 und bleibt in nahezu konstantem Abstand zum Erdboden. In Relation zu Mähaufbereitern, die als Ganzes verschwenkbar sind, kann die erfindungsgemäße Bauart nicht nur leichter dimensioniert sein, sondern passt sich vor allem schneller und leichter allen Bodenunebenheiten an.

In Figur 3 ist lediglich ein U-förmiges Tragelement schematisch dargestellt, bestehend aus einem Tragbalken 27, welcher mittig durch ein einziges Kugelgelenk 28 am Hauptrahmen 10 angreift und an beiden Seiten ebenfalls durch Kugelgelenke 29 mit den Lenkern 21 verbunden ist. Die Verbindung des Aufbereiters 2 mit den Lenkern 21 erfolgt unverändert auch durch Kugelgelenke 30. Diese Gestaltung ermöglicht auf konstruktiv einfache Weise sowohl eine pendelnde Anpassung des Aufbereiters um eine horizontale Längsmittelachse 31 als auch gleichzeitig um die horizontale Querachse 22 sowie eine Anpassung bei einseitigen Unebenheiten.

Im Rahmen der Erfindung kann das Mähwerk auch als Trommelmähwerk oder als Kombination von Mähkreiseln und - trommeln ausgebildet sein. Desgleichen können alternativ Quetschwalzenaufbereiter oder andere Aufbereitungselemente eingesetzt werden.

## Patentansprüche

1. Mähaufbereiter, bestehend aus einem an einem Hauptrahmen (10) höhenbeweglich aufgehängten Mähwerk (1) und einem dem Mähwerk (1) nachgeschalteten Aufbereiter (2), welcher verstellbar mit dem Hauptrahmen (10) verbunden ist, **dadurch gekennzeichnet, dass** der Aufbereiter (2) durch wenigstens ein Verbindungsglied (19) beweglich mit dem Mähwerk (1) gekuppelt ist.

2. Mähaufbereiter nach Anspruch 1, **dadurch gekennzeichnet, dass** das Verbindungsglied ein Drehgelenk (19) ist.

3. Mähaufbereiter nach Anspruch 1 oder 2, **dadurch gekennzeichnet, dass** eine Gelenkachse (20) des Verbindungsgliedes (19) in geringem Abstand zum Mähkreisel (6) angeordnet ist.

4. Mähaufbereiter nach Anspruch 1, 2 oder 3 **dadurch gekennzeichnet, dass** das Verbindungsglied eine Schiebeführung aufweist.

5. Mähaufbereiter nach Anspruch 1, 2 oder 3, **dadurch gekennzeichnet, dass** das Verbindungsglied ein Zwischenstück mit beabstandeten Gelenkachsen ist, das sowohl am Mähwerk (1) gelenkig als auch am Aufbereiter (2) gelenkig angreift.

6. Mähaufbereiter nach einem der Ansprüche 1 bis 5, **dadurch gekennzeichnet, dass** das Verbindungsglied Kugelgelenke aufweist.

7. Mähaufbereiter nach einem oder mehreren der vorhergehenden Ansprüche, **dadurch gekennzeichnet, dass** auf beiden Seiten des Mähwerkes (1) je ein Verbindungsglied (19) für den Aufbereiter (2) vorgesehen ist.

8. Mähaufbereiter nach einem oder mehreren der vorhergehenden Ansprüche, **dadurch gekennzeichnet, dass** die Gelenkachse (20) des Verbindungsgliedes (19) parallel zur Drehachse (15) eines Aufbereitungsrotors (14) des Aufbereiters (2) angeordnet ist.

9. Mähaufbereiter nach einem oder mehreren der vorhergehenden Ansprüche, **dadurch gekennzeichnet, dass** der Aufbereiter (2) durch wenigstens ein Tragelement (21, 27) mit dem Hauptrahmen (10) gelenkig verbunden ist, welches einenends schwenkbar um wenigstens eine obere horizontale Gelenkachse (22) am Hauptrahmen (10) und anderenends um zumindest eine untere horizontale Gelenkachse (23) schwenkbar am Aufbereiter (2) angelenkt ist.

10. Mähaufbereiter nach Anspruch 9, **dadurch gekennzeichnet, dass** das Tragelement ein einziger, mittig am Aufbereiter (2) angeordneter Lenker ist.

11. Mähaufbereiter nach Anspruch 9 oder 10, **dadurch gekennzeichnet, dass** das Tragelement von zwei im Abstand nebeneinander angeordneten Lenkern (21) gebildet wird.

12. Mähaufbereiter nach Anspruch 11, **dadurch gekennzeichnet, dass** die Lenker (21) oben durch Gelenke (29) mit einem Tragbalken (27) verbunden sind, welcher durch wenigstens ein Gelenk (28) mittig am Hauptrahmen (10) aufgehängt ist.

13. Mähaufbereiter nach einem der Ansprüche 9 bis 12, **dadurch gekennzeichnet, dass** der Aufbereiter (2) sowohl um eine obere horizontale Längsmittelachse (31) pendelbar als auch um eine horizontale Querachse (22) schwenkbar am Hauptrahmen (10) angelenkt ist.

14. Mähaufbereiter nach einem oder mehreren der Ansprüche 9 bis 13, **dadurch gekennzeichnet, dass** alle Verbindungen zwischen Hauptrahmen (10) und Tragelementen (21, 27) sowie zwischen Tragelement (21) und Aufbereiter (2) als Kugelgelenke (28, 29, 30) ausgestaltet sind.

15. Mähaufbereiter nach einem oder mehreren der vorhergehenden Ansprüche, **dadurch gekennzeichnet, dass** der Mähaufbereiter (2) beim Anheben des Mähwerkes (1) aus einer normalen Arbeitsstellung (3) in eine Ausweichstellung (26) relativ zum Mähwerk (1) in Umlaufrichtung (16) des Aufbereitungsrotors (14) verschwenkt.

16. Mähaufbereiter nach einem oder mehreren der Ansprüche 9 bis 15, **dadurch gekennzeichnet, dass** die untere Gelenkachse (23) der Tragelemente (21, 27) in Fahrtrichtung gesehen hinter der Drehachse (15) des Aufbereitungsrotors (14) liegt.

17. Mähaufbereiter nach einem oder mehreren der vorhergehenden Ansprüchen 9 bis 16, **dadurch gekennzeichnet, dass** die untere Gelenkachse (23) der Tragelemente (21, 27) und die Drehachse (15) des Aufbereitungsrotors (14) etwa in einer horizontalen Ebene liegen.

18. Mähaufbereiter nach einem der vorhergehenden Ansprüche 9 - 17, **dadurch gekennzeichnet, dass** die Tragelemente (21) von ihrer am Aufbereiter (2) liegenden Gelenkachse (23) aus aufwärts gerichtet angeordnet sind.

19. Mähaufbereiter nach einem der vorhergehenden Ansprüche, **dadurch gekennzeichnet, dass** der Abstand des Verbindungsgliedes (19) zur Gelenkachse (23) der Tragelemente (21, 27) grösser ist als der Abstand der Drehachse (15) des Zinkenrotors (14) zur Gelenkachse (23).

20. Mähaufbereiter nach einem oder mehreren der vorhergehenden Ansprüche, **dadurch gekennzeichnet, dass** das Mähwerk (1) über eine Gewichtsentlastungsfeder (9) und Parallellenker (7, 8) mit dem Hauptrahmen (10) verbunden ist.

21. Mähaufbereiter nach einem oder mehreren der vorhergehenden Ansprüche, **dadurch gekennzeichnet, dass** der Hauptrahmen (10) mit mindestens einem Hydrozylinder (13) heb- und senkbar ausgebildet ist und eine verschwenk- und feststellbare Zugdeichsel (4) aufweist.

## Claims

1. A mower-conditioner comprising a mower (1) suspended vertically displaceable on a main frame (10) and a conditioner (2) following the mower (1), adjustably linked to the main frame (10), **characterised in that** the conditioner (2) is movably coupled to the mower (1) via at least one coupling member (19).

2. A mower-conditioner according to claim 1, **characterised in that** the coupling member is a pivot joint (19).

3. A mower-conditioner according to claim 1 or 2, **characterised in that** a joint axis (20) of the coupling member (19) is arranged at a small distance from the mower rotor (6).

4. A mower-conditioner according to claim 1, 2 or 3, **characterised in that** the coupling member has a sliding guide.

5. A mower-conditioner according to claim 1, 2 or 3, **characterised in that** the coupling member is an intermediate piece with separated joint axes, which engages articulately both on the mower (1) and on the conditioner (2).

6. A mower-conditioner according to any one of claims 1 to 5, **characterised in that** the coupling member has ball joints.

7. A mower-conditioner according to one or more of the preceding claims, **characterised in that** on both sides of the mower (1) a coupling member (19) is provided for the conditioner (2).

8. A mower-conditioner according to one or more of the preceding claims, **characterised in that** the joint axis (20) of the coupling member (19) is arranged parallel to the axis of rotation (15) of a conditioner rotor (14) of the conditioner (2).

9. A mower-conditioner according to one or more of the preceding claims, **characterised in that** the conditioner (2) is pivotably linked to the main frame (10) via at least one support element (21, 27), which is rotatably pivoted at one end about at least one upper horizontal joint axis (22) on the main frame (10) and, at the other end, about at least one lower horizontal joint axis (23) on the conditioner (2).

10. A mower-conditioner according to claim 9, **characterised in that** the support element is a single linkage rod arranged centrally on the conditioner (2).

11. A mower-conditioner according to claim 9 or 10, **characterised in that** the support element is formed by two linkage rods (21) arranged in a distance side by side.

12. A mower-conditioner according to claim 11, **characterised in that** the linkage rods (21) are linked above by joints (29) with a support beam (27) which is suspended by at least one joint (28) centrally on the main frame (10).

13. A mower-conditioner according to any one of claims 9 to 12, **characterised in that** the conditioner (2) is jointed on the main frame (10) both able to swing about an upper horizontal longitudinal central axis (31) and able to pivot about a horizontal transverse axis (22).

14. A mower-conditioner according to one or more of claims 9 to 13, **characterised in that** all couplings between main frame (10) and support elements (21, 27) and between support element (21) and conditioner (2) are designed as ball joints (28, 29, 30).

15. A mower-conditioner according to one or more of the preceding claims, **characterised in that** on raising of the mower (1) out of a normal working position (3) into a yielding position (26), the conditioner (2) is pivoted relative to the mower (1) in the direction of rotation (16) of the conditioner rotor (14).

16. A mower-conditioner according to one or more of claims 9 to 15, **characterised in that** the lower joint axis (23) of the support elements (21, 27) lies - seen in the direction of travel - behind the axis of rotation (15) of the conditioner rotor (14).

17. A mower-conditioner according to one or more of the preceding claims 9 to 16, **characterised in that** the lower joint axis (23) of the support elements (21, 27) and the axis of rotation (15) of the conditioner rotor (14) lie approximately in one horizontal plane.

18. A mower-conditioner according to any one of the preceding claims 9 to 17, **characterised in that** the support elements (21) are arranged directed upwards from their joint axis (23) lying on the conditioner (2).

19. A mower-conditioner according to any one of the preceding claims, **characterised in that** the distance of the coupling member (19) from the joint axis (23) of the support elements (21, 27) is greater than the distance of the axis of rotation (15) of the tined rotor (14) from the joint axis (23).

20. A mower-conditioner according to one or more of the preceding claims, **characterised in that** the mower (1) is linked via a weight-relieving spring (9) and parallel linkage rods (7, 8) to the main frame (10).

21. A mower-conditioner according to one or more of the preceding claims, **characterised in that** the main frame (10) is designed capable of being raised and lowered with at least one hydraulic cylinder (13) and has a pivotable and fixable drawbar (4).

## Revendications

1. Faucheuse-conditionneuse composée d'une faucheuse suspendue de manière mobile en hauteur à un châssis (10) et d'une conditionneuse (2) située en aval de la faucheuse (1), conditionneuse qui est reliée de manière réglable au châssis (10), **caractérisée en ce que** la conditionneuse (2) est couplée de façon mobile par au moins un organe de liaison (19) à la faucheuse (1).

2. Faucheuse-conditionneuse selon la revendication 1, **caractérisée en ce que** l'organe de liaison est une articulation tournante (19).

3. Faucheuse-conditionneuse selon la revendication 1 ou 2, **caractérisée en ce qu'**un axe d'articulation (20) de l'organe de liaison (19) est placé à faible distance de la faux circulaire (6).

4. Faucheuse-conditionneuse selon la revendication 1, 2 ou 3, **caractérisée en ce que** l'organe de liaison présente un guidage coulissant.

5. Faucheuse-conditionneuse selon la revendication 1, 2 ou 3, **caractérisée en ce que** l'organe de liaison est une pièce intermédiaire avec des axes d'articulation à intervalle, qui s'engrène de façon articulée aussi bien sur la faucheuse (1) que sur la conditionneuse (2).

6. Faucheuse-conditionneuse selon l'une des revendications 1 à 5, **caractérisée en ce que** l'organe de liaison présente des articulations à billes.

7. Faucheuse-conditionneuse selon l'une quelconque ou plusieurs revendications précédentes, **caractérisée en ce que** des deux côtés de la faucheuse (1) est prévu respectivement un organe de liaison (19) pour la conditionneuse (2).

8. Faucheuse-conditionneuse selon l'une quelconque ou plusieurs revendications précédentes, **caractérisée en ce que** l'axe d'articulation (20) de l'organe de liaison (19) est placé parallèlement à l'axe tournant (15) d'un rotor de conditionnement (14) de la conditionneuse (2).

9. Faucheuse-conditionneuse selon l'une quelconque ou plusieurs revendications précédentes, **caractérisée en ce que** la conditionneuse (2) est reliée de façon articulée par au moins un élément porteur (21, 27) au châssis (10), lequel, à une extrémité, est articulé au châssis(10)de façon pivotante autour d'au moins un axe d'articulation (22) supérieur horizontal et à l'autre extrémité, à la conditionneuse (2) de façon pivotante autour d'au moins un axe d'articulation (23) inférieur horizontal.

10. Faucheuse-conditionneuse selon la revendication 9, **caractérisée en ce que** l'élément porteur est un seul bras articulé placé au centre de la conditionneuse (2).

11. Faucheuse-conditionneuse selon la revendication 9 ou 10, **caractérisée en ce que** l'élément porteur est constitué de deux bras articulés (21) placés à distance l'un à côté de l'autre.

12. Faucheuse-conditionneuse selon la revendication 11, **caractérisée en ce que** les bras articulés (21) sont reliés en haut par des articulations (29) à une poutre porteuse (27), laquelle est suspendue par au moins une articulation (28) au centre du châssis (10).

13. Faucheuse-conditionneuse selon l'une des revendications 9 à 12, **caractérisée en ce que** la conditionneuse (2) est articulée sur le châssis (10) aussi bien avec un mouvement pendulaire autour d'un axe central longitudinal (31) supérieur horizontal qu'avec un mouvement de pivotement autour d'un axe transversal (22) horizontal.

14. Faucheuse-conditionneuse selon l'une quelconque ou plusieurs revendications 9 à 13, **caractérisée en ce que** toutes les liaisons entre le châssis (10) et les éléments porteurs (21, 27) ainsi qu'entre l'élément porteur (21) et la conditionneuse (2) sont conçus comme articulations à billes (28, 29, 30).

15. Faucheuse-conditionneuse selon l'une quelconque ou plusieurs revendications précédentes, **caractérisée en ce que** la faucheuse-conditionneuse (2) bascule lorsque l'on soulève la faucheuse (1) d'une position normale de fonctionnement (3) dans une position alternative (26) par rapport à la faucheuse (1) dans le sens de rotation du rotor de conditionnement (14).

16. Faucheuse-conditionneuse selon l'une quelconque ou plusieurs revendications 9 à 15, **caractérisée en ce que** l'axe d'articulation inférieur (23) des éléments porteurs (21, 27) se trouvent, vu dans le sens de la marche, derrière l'axe tournant (15) du rotor de conditionnement (14).

17. Faucheuse-conditionneuse selon l'une quelconque ou plusieurs revendications précédentes 9 à 16, **caractérisée en ce que** l'axe d'articulation (23) inférieur des éléments porteurs (21, 27) et l'axe tournant (15) du rotor de conditionnement (14) se trouvent sur un plan à peu près horizontal.

18. Faucheuse-conditionneuse selon l'une quelconque des revendications précédentes 9 - 17, **caractérisée en ce que** les éléments porteurs (21) sont disposés orientés vers le haut à partir de leur axe d'articulation (23) situé sur la conditionneuse (2).

19. Faucheuse-conditionneuse selon l'une quelconque des revendications précédentes, **caractérisée en ce que** la distance de l'organe de liaison (19) à l'axe d'articulation (23) des éléments porteurs (21, 27) est plus grande que la distance de l'axe tournant (15) du rotor à dents (14) à l'axe d'articulation (23).

20. Faucheuse-conditionneuse selon l'une quelconque ou plusieurs revendications précédentes, **caractérisée en ce que** la faucheuse (1) est reliée au châssis (10) par un ressort de décharge de poids (9) et de bras parallèles (7, 8).

21. Faucheuse-conditionneuse selon l'une quelconque ou plusieurs revendications précédentes, **caractérisée en ce que** le châssis (10) est conçu avec au moins un vérin hydraulique (13) avec des mouvements vers le haut et vers le bas et présente un timon de traction (14) qu'on peut fixer et faire pivoter.
